# EUROPEAN PATENT SPECIFICATION

(11) **EP 1 806 881 B1**
(45) Date of publication and mention of the grant of the patent: **11.11.2009**
(21) Application number: 06290040.2
(22) Date of filing: 05.01.2006
(51) Int. Cl.: H04L 12/56, H04L 29/06

(54) **Method and apparatus for processing data units**
Verfahren und Vorrichtung zur Verarbeitung von Dateneinheiten
Procédé et dispositif de traitement des unités de données

(43) Date of publication of application: 11.07.2007
(73) Proprietor: Alcatel Lucent, 75008 Paris (FR)
(72) Inventor: Renaux, Patrick Albert Paul, 1040 Brussels (BE); Cautereels, Paul Henri Marie, 2880 Hingene (BE); Borghs, Eric Frans Elisa, 2440 Geel (BE); Boucque, Steven Gerard, 8630 Veurne (BE); Beck, Michaël Andries Thomas, 2170 Merksem (BE)
(74) Representative: Narmon, Gisèle Marie Thérèse

(56) References cited:
- US-A1- 2003 021 269
- US-A1- 2003 058 878
- US-B1- 6 338 078

## Description

The present invention relates to a network unit adapted to process and transmit data units belonging to distinct traffic flows, and comprising:
- a dispatching unit adapted to dispatch said data units for further parallel processing,
- traffic processing units coupled to said dispatching unit, and adapted to process said data units in parallel,
- an aggregation unit coupled to said traffic processing units, and adapted to aggregate said processed data units for further transmission.

Such a network unit is of common general knowledge. For instance, the network unit may refer to an access unit (or edge node) such as a Digital subscriber Line Access Multiplexer (DSLAM), a switch such as an Ethernet or Asynchronous Transfer Mode (ATM) or Multi-Protocol Label switched (MPLS) switch, a core or edge router such as an Internet Protocol (IP) router, a modem or a set top box, an access server such as a Broadband Remote Access Server (BRAS), an application server such as a video server, etc.

Example of data units (or data packets) are Ethernet frames, IP or MPLS packets, ATM cells, etc, which data units forming part of distinct traffic flows (or data flows or application flows) between distinct applications running on distinct communicating devices (or hosts).

The traffic (or packet) processing units are adapted for instance to classify the data units (e.g., to further decide about which particular action to carry out), and/or to filter the data units (e.g., dropping unauthorized traffic), and/or to modify their content (e.g., adding or removing a virtual Local Area Network (VLAN) tag, setting or modifying a Quality of service (QoS) tag).

Data units are typically processed in a pipelined way so as to conform to the initial packet order, which is defined by applying global and fair rules taking into account the complete traffic transiting through the network unit. The initial packet order is for instance determined by schedulers of the network unit that schedule traffic according to e.g. traffic priorities.

Processing data units in parallel then implies that data units are dispatched for processing in one way, e.g. in a cyclic or round robin way, and fetched after being processed in the same-way.

A problem the skilled person would be confronted with is that, on account of traffic diversity in terms of payload type, packet length, packet structure, etc, and on account of of various actions carried out over a packet, a long processing over a single packet can stall the complete pipeline, while other packets could be ready to go. This is for instance the case in us 2003/021269 A1 wherein it is described that frames are collected in an output buffer and thereafter put in sequence in a sequencer, meaning that the sequencer has to wait to send out the flow until there is no possibility anymore to receive out of sequence frames. Also in US-B1-6 338 078 a parallel processing system is described where thanks to a hashing mechanism the sequence of the packets is preserved which corresponds to having the packets handled sequentially. The same for the invention described in us 2003/058878 A1 where packets having the same priority are queued in the same transmit queue.

It is therefore an object of the present invention to improve parallel processing and forwarding of data units within a network unit.

According to the invention, this object is achieved due to the fact that said network unit further comprises:
- an arbitration unit coupled to said traffic processing units, and adapted, for a particular processed data unit that is ready in a particular processing unit for further aggregation and transmission, to identify a particular traffic flow to which said particular data unit belongs,
   to check whether a further data unit handled by a further traffic processing unit belongs to said particular traffic flow and precedes said particular data unit within said particular traffic flow,
   if none, to allow delivery of said particular data unit for further aggregation and transmission, else, to not allow delivery of said particular processed data unit for further aggregation and processing as long as the processing and delivery of said further data unit is not completed.

A traffic flow is essentially defined as a group of packets that all comply to a particular and arbitrary set of rules, or that all share the same properties.

A processing unit that is busy with a data unit shall recognize the identity of the flow to which the data unit belongs. This piece of information is shared with the arbitration unit, which can then decide to egress a data unit, the processing of which is completed, as long as it does not disturb the order within that flow, or alternatively speaking as long as the reordering affects data units belonging to different flows.

A network unit according to the invention is advantageous in that packet processing and forwarding is made more efficient. The re-ordering has no operational consequence as the initial order per flow is conformed to.

An embodiment of a network unit according to the invention is characterized in that said particular traffic flow is identified by means of a particular source address and/or a particular destination address.

Examples of a source or destination address is a Medium Access Control (MAC) address, an network IP address, an ATM virtual Path Identifier (VPI) or virtual Channel Identifier (VCI), an MPLS label, etc.

This embodiment is particularly advantageous in that the initial packet order between two communicating devices is conformed with, while allowing releasing of ready-to-go packets originating from and/or bound to another communicating device.

Another embodiment of a network unit according to the invention is characterized in that said particular traffic flow is identified by means of a particular payload type.

A particular payload type is typically identified by means of a corresponding Service Access Point Identifier (SAPI) such as a User Datagram Protocol (UDP) or Transmission Control Protocol (TCP) port number, or a protocol value, or an Ethernet type value, at a particular protocol layer such as the TCP or UDP or IP or Ethernet layer, in a particular protocol suite such as the IP protocol suite.

This embodiment is advantageous in that particular application flows (e.g., video flows) can be differentiated, and processed independently, from the remaining flows.

Still another embodiment of a network unit according to the invention is characterized in that said particular traffic flow is identified by means of a particular traffic priority.

Examples of traffic priority information encoded into data units are a Differentiated Service Code Point (DSCP) encoded into the IPv4 Type of service (TOS) octet or the IPv6 Traffic class octet, or a priority level encoded into the user Priority Field of a VLAN tag, etc.

Traffic priority may also refer to e.g. an ATM service category negotiated during a connection set up and associated with a particular VPI and/or VCI, or to a service Level Agreement (SLA) negotiated between a service provider and a customer.

This embodiment is further advantageous in that application flows having different traffic priority can be differentiated, and processed independently, from each other.

Other traffic flow discriminations can be thought of, such a combination of a particular source and/or destination address together with a particular payload type and/or traffic priority and/or further distinguishable packet/flow/customer information.

A further embodiment of a network unit according to the invention is characterized in that said arbitration unit is further adapted to compare transmit or schedule sequence numbers of said particular data unit and said further data unit, thereby determining whether said further data unit precedes said particular data unit within said particular traffic flow.

This embodiment relies upon a transmit sequence number as encoded into a packet by a remote transmitting unit, such as a TCP sequence number, or upon a schedule sequence number as determined by a scheduler forming part of the network unit, thereby easing the implementation of the arbitration algorithm.

The network unit may also compare receive sequence numbers as determined by e.g. a receiving unit forming part of the network unit.

Further characterizing embodiments are mentioned in the appended claims.

The present invention also relates to a method for processing and transmitting data units belonging to distinct traffic flows, and comprising the steps of:
- dispatching said data units for further parallel processing,
- processing, in traffic processing units, said data units in parallel,
- aggregating said processed data units for further transmission.

A method according to the invention further comprises, for a particular processed data unit that is ready in a particular processing unit for further aggregation and transmission, the steps of:
- identifying a particular traffic flow to which said particular data unit belongs,
- checking whether a further data unit handled by a further traffic processing unit belongs to said particular traffic flow and precedes said particular data unit within said particular traffic flow,
- if none, allowing delivery of said particular data unit for further aggregation and transmission else, to not allow delivery of said particular processed data unit for further aggregation and processing as long as the processing and delivery of said further data unit is not completed.

Embodiments of a method according to the invention correspond with the embodiments of a network unit according to the invention.

It is to be noticed that the term 'comprising', also used in the claims, should not be interpreted as being restricted to the means or steps listed thereafter. Thus, the scope of the expression 'a device comprising means A and B' or 'a method comprising steps A and B' should not be limited to devices or methods consisting only of components or steps A and B. It means that with respect to the present invention, the relevant components of the device or the relevant steps of the method are A and B.

similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents a first embodiment of a network unit according to the invention,
- fig. 2 represents a second embodiment of a network unit according to the invention,
- fig. 3 represents a third embodiment of a network unit according to the invention.

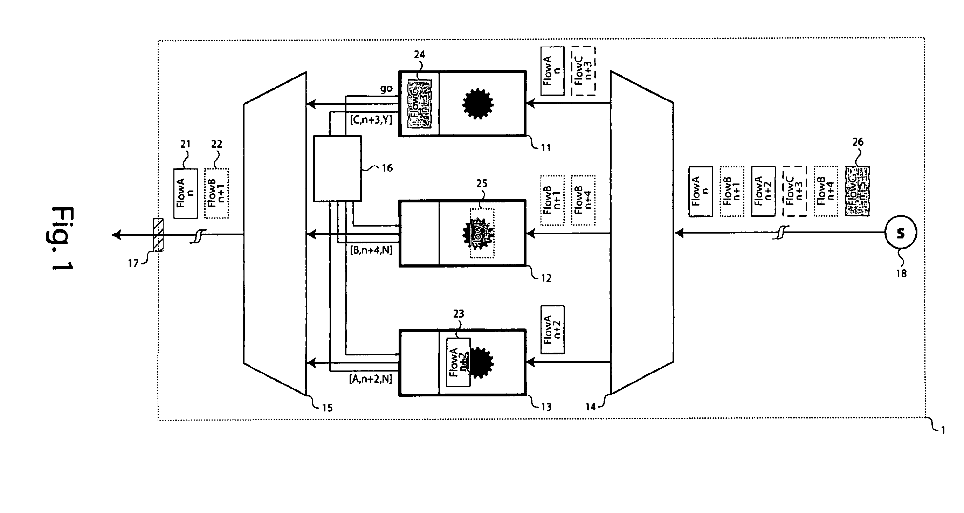

There is seen in fig. 1 an IP-based network unit 1 comprising:
- an egress scheduler 18,
- a dispatching unit 14,
- packet processing units 11 to 13,
- an aggregation unit 15,
- an arbitration unit 16,
- an output port 17.

An input of the processing units 11 to 13 is coupled to an output of the dispatching unit 14. An output of the processing units 11 to 13 is coupled to an input of the aggregation unit 15. An input of the dispatching unit 14 is coupled to an output of the scheduler 18. An output of the aggregation unit 15 is coupled to the output port 17. The arbitration unit is bi-directionally coupled to the processing units 11 to 13.

The output of the aggregation unit 15 may, as an alternative embodiment, be coupled to an input of a switch fabric, or to an input of a further processing stage, etc, and the input of the dispatching unit 14 may be coupled to an output of an ingress scheduler, or to an output of a receiving unit, etc.

The egress scheduler 18 is adapted to schedule outgoing IP packets according to traffic priorities. As such, the scheduler 18 determines a particular schedule packet order.

The dispatching unit 14 is adapted to dispatch IP packets towards the processing units 11 to 13. The dispatching unit 14 supplies the next scheduled IP packet to a processing unit that is done with a prior packet and that is ready to accept a new packet.

As an alternative solution, the processing units 11 to 13 may fetch the IP packets directly from the dispatching unit 14, in which case the dispatching unit 14 makes the packets available by means of e.g. a shared First In First out (FIFO) queue.

The processing units 11 to 13 refer to distinct programmable packet processors and/or distinct logic circuitry (hardly or softly configured) and/or distinct binary codes (running on one or more processor) featuring relatively efficient packet processing capabilities.

The processing units 11 to 13 are adapted to process IP packets based on a set of rules. For instance, the processing units 11 to 13 are adapted to classify IP packets (e.g., to further decide about which particular action to carry out), and/or to filter out IP packets (e.g., dropping unauthorized traffic), and/or to modify the content of IP packets (e.g., adding or removing a virtual Local Area Network (VLAN) tag, setting or modifying a Quality of service (QoS) tag, changing the destination and/or source IP address). After being processed (rightmost part of blocks 11 to 13), the IP packets are ready for delivery to the aggregation unit 15 (leftmost part of blocks 11 to 13).

In a preferred embodiment of the present invention, a data flow is defined by the following combination:
- a particular source IP network address, and
- a particular destination IP network address.

Following this definition, the processing units 11 to 13 are further adapted to identify the traffic flow to which an IP packet belongs by looking at the corresponding fields within the IP packet.

The processing units 11 to 13 may also look at further fields, such as the TCP/UDP client/server port number, the ToS field, the IP protocol value, the Ethertype value, etc, or at further contextual information, such as a customer profile, etc, thereby allowing discrimination of traffic flows at a further extent.

The processing units 11 to 13 are further supplied with the schedule sequence number of an IP packet.

The processing units 11 to 13 may be alternatively supplied with the absolute receive sequence number of an IP packet, such as determined by e.g. a receiving unit of the network unit 1, or with the receive sequence number of an IP packet relative to a particular flow, such as determined by e.g. a packet classification unit, or may decode a transmit sequence number from the packet directly, such as a TCP sequence number encoded by a TCP sending host (provided the considered data flow reduces at least to a TCP flow).

Finally, the processing units 11 to 13 supply, for each packet that is being processed (no matter whether the packet is being fetched, or is being processed, or is ready to go), the following pieces of information to the arbitration unit 16 (see [flow_id, seq_nbr, Y/N] triplets in fig. 1):
- an identifier of the traffic flow to which the current IP packet belongs (flow_id),
- the sequence number of the current IP packet (seq_nbr),
- and whether processing over the current IP packet is completed, that is to say whether this packet is ready to be transmitted to the aggregation unit 15 (Yes/No).

The aggregation unit 15 is adapted to aggregate IP packets from the processing units 11 to 13 into a single packet stream transmitted through the output port 17 towards a further network unit (not shown).

The arbitration unit 16 is adapted to elect a particular packet, the processing of which is completed, for further aggregation and transmission through the output port 17.

To do so, the arbitration unit 16 sends a control signal, further referred to as a go signal, whereby a particular processing unit is allowed to egress a ready-to-go packet towards the aggregation unit 15.

The election algorithm makes use of the aforementioned information supplied by the processing units 11 to 13. More specifically, the arbitration unit 16 checks, for a particular packet that is ready to go in a particular processing unit, whether a further data packet handled by a further processing unit belongs to the same data flow, and if so, compares their respective sequence number to determine whether this further data packet precedes the ready-to-go packet in the data flow. If no such further packet is found, a go signal is sent to the processing unit that handles the ready-to-go packet, thereby causing its transmission towards the aggregation unit 15, and further towards the output port 17. Else, the ready-to-go packet is not allowed to be delivered as long as the processing and transmission of the preceding packet is not completed.

An operation of the preferred embodiment follows.

There is seen still in fig. 1 traffic entering, being processed by, and leaving the network unit 1.

As an illustrative example, IP traffic bound towards the output port 17 comprises 3 traffic flows FlowA, FlowB and FlowC. More specifically, the outgoing traffic comprises IP packets 21 to 26 with respective schedule sequence numbers n to n+5, n being an arbitrary positive integer. IP packets 21 and 23 belong to the traffic flow FlowA, IP packets 22 and 25 belong to the traffic flow FlowB, and IP packets 24 and 26 belong to the traffic flow FlowC.

Initially, IP packets 21, 22 and 23 are dispatched towards the processing units 11, 12 and 13 respectively for further processing. Packets 21 and 22 have been processed and transmitted through the output port 17 towards the further network unit. When processing units 11 and 12 are done with packets 21 and 22, they are supplied with new packets 24 and 25 respectively.

At a particular instant of time (gray highlighted), the processing of packet 24 is completed, which packet being ready to go in the processing unit 11, while packets 23 and 25 are still being processed (packet 23 is for instance a particular packet that asks for a particularly time-consuming treatment).

At this instant of time, the processing unit 11 notifies the arbitration unit 15 that packet 24 is ready to go (see [c,n+3,Y] signal in fig. 1), while the processing units 12 and 13 notify the arbitration unit 15 that packets 25 and 23 are being processed (see [B,n+4,N] and [A,n+2,N] signals respectively in fig. 1).

In prior art systems, the arbitration unit waits for the processing and transmission of packet 23 before allowing packet 24 to be egressed (so as to comply with the initial packet schedule order), although packet 24 was ready to go ahead of time.

In a network unit according to the invention, the arbitration unit 15 checks, upon receipt of the [C,n+3,N] to [c,n+3,Y] signal transition from the processing unit 11 (meaning that processing of packet 24 just completes), whether another packet belonging to the same traffic flow, presently FlowC, and preceding packet 24 within that traffic flow, presently having a schedule sequence number lower than n+3, is handled by another processing unit, presently the processing units 12 and 13.

As packets 23 and 25 do not fulfill these conditions (packet 23 and 25 belongs to different traffic flows, presently FlowA and FlowB respectively), the arbitration unit 15 sends a go signal to the processing unit 11 (see go in fig. 1), whereby the processing unit 11 is allowed to egress packet 24 towards the aggregation unit 15, which packet being then further transmitted through the output port 17 towards the further network unit.

As a consequence, the processing unit 11 can proceed immediately with a new packet, presently packet 26, without waiting for the processing and transmission of packet 23 by the processing unit 13, thereby speeding up the processing of packets (and thus their forwarding) within the network unit 1.

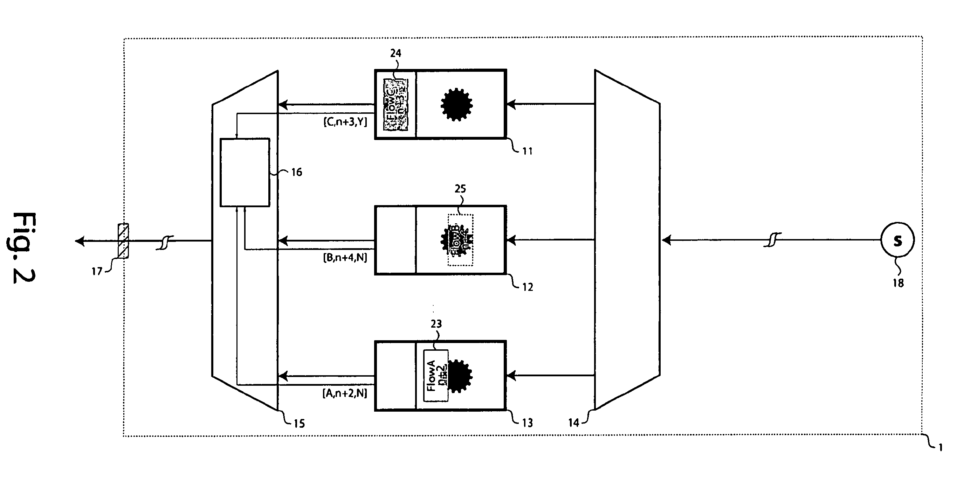

There is seen in fig. 2 an alternative embodiment of the network unit 1, wherein the aggregation unit 15 is adapted to fetch processed packets directly from the processing units 11 to 13 (by means of e.g. a shared memory area), and wherein the arbitration unit 16 is integrated into the aggregation unit 15 for closer collaboration and greater efficiency.

In this embodiment, no go signal is sent to the processing units 11 to 13. Instead, the arbitration unit 16 supplies the aggregation unit 15 with the identity of the processing unit, from which the next ready-to-go packet shall be fetched for further transmission towards the output port 17.

The aggregation unit 15 fetches the packets from the processing units 11 to 13 in the sequence order specified by the arbitration unit 16.

As an alternative solution, the arbitration unit 16 may be built as a separate unit, in which case a new signal needs to be sent to the aggregation unit 15, whereby the next elected processing unit is identified.

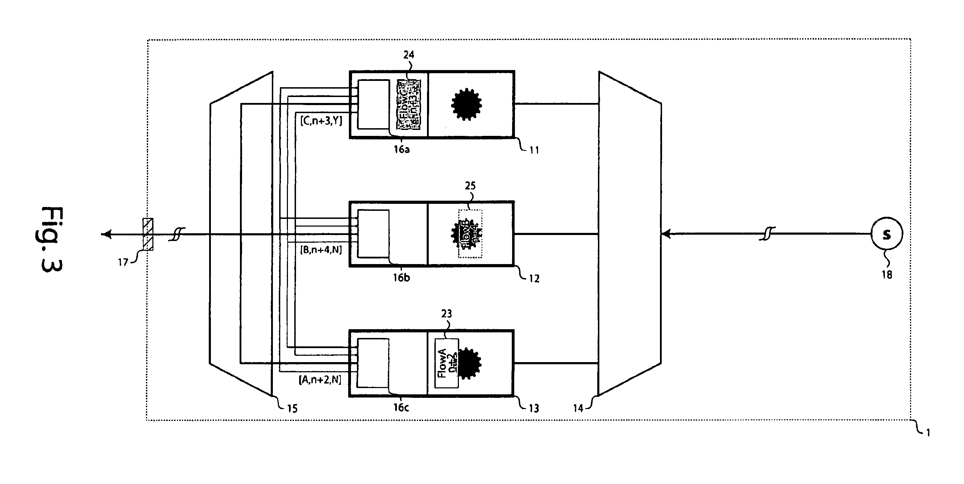

There is seen in fig. 3 another embodiment of the network unit 1, wherein the arbitration unit is distributed over the processing units 11 to 13, such as embodied by the arbitration logics 16a to 16c respectively.

Each arbitration logic supplies the other arbitration logics with the triplet [flow_id, seq_nbr, Y/N] (see above definition), thereby allowing each processing unit to decide whether a packet can be egressed, or whether another packet shall be awaited for.

The arbitration logics 16a to 16c further include the necessary means for avoiding and/or resolving packet collision, the aggregation unit 15 reducing to a single shared medium, such as an Ethernet bus or alike.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A network unit (1) adapted to process and transmit data units (21 to 26) belonging to distinct traffic flows (FlowA; FlowB; FlowC), and comprising:
- a dispatching unit (14) adapted to dispatch said data units for further parallel processing,
- traffic processing units (11 to 13) coupled to said dispatching unit, and adapted to process said data units in parallel,
- an aggregation unit (15) coupled to said traffic processing units, and adapted to aggregate said processed data units for further transmission,
***characterized in that*** said network unit further comprises:
- an arbitration unit (16) coupled to said traffic processing units, and adapted, for a particular processed data unit (24) that is ready in a particular traffic processing unit (11) for further aggregation and transmission, to identify a particular traffic flow (FlowC) to which said particular processed data unit belongs, to check whether a further data unit (23; 25) handled by a further traffic processing unit (12; 13) belongs to said particular traffic flow and precedes said particular processed data unit within said particular traffic flow,
if none, to allow (go) delivery of said particular processed data unit for further aggregation and transmission,
else, to not allow delivery of said particular processed data unit for further aggregation and transmission as long as the processing and delivery of said further data unit is not completed.

2. A network unit according to claim 1, ***characterized in that*** said particular traffic flow is identified by means of a particular source address and/or a particular destination address.

3. A network unit according to claim 1, ***characterized in that*** said particular traffic flow is identified by means of a particular payload type.

4. A network unit according to claim 1, ***characterized in that*** said particular traffic flow is identified by means of a particular traffic priority.

5. A network unit according to claim 1, ***characterized in that*** said arbitration unit is further adapted to compare transmit or schedule sequence numbers of said particular processed data unit and said further data unit, thereby determining whether said further data unit precedes said particular processed data unit within said particular traffic flow.

6. A network unit according to claim 1, ***characterized in that*** said arbitration unit is centralized into said aggregation unit.

7. A network unit according to claim 1, ***characterized in that*** said arbitration unit is distributed over said processing units.

8. A method for processing and transmitting data units (21 to 26) belonging to distinct traffic flows (FlowA; FlowB; FlowC), and comprising the steps of:
- dispatching said data units for further parallel processing,
- processing, in traffic processing units (11 to 13), said data units in parallel,
- aggregating said processed data units for further transmission,
***characterized in that*** said method further comprises, for a particular processed data unit (24) that is ready in a particular traffic processing unit (11) for further aggregation and transmission, the steps of:
- identifying a particular traffic flow (FlowC) to which said particular processed data unit belongs,
- checking whether a further data unit (23; 25) handled by a further traffic processing unit (12; 13) belongs to said particular traffic flow and precedes said particular processed data unit within said particular traffic flow,
- if none, allowing (go) delivery of said particular processed data unit for further aggregation and transmission else, to not allow delivery of said particular processed data unit for further aggregation and transmission as long as the processing and delivery of said further data unit is not completed.

## Patentansprüche

1. Eine Netzwerkeinheit (1), die angepaßt ist, um Dateneinheiten (21 bis 26), die zu verschiedenen Verkehrsflüssen (FlowA; FlowB; FlowC) gehören, zu verarbeiten und zu übertragen, und umfassend:
- eine Auswahleinheit (14), die angepaßt ist, um die Dateneinheiten für die weitere Parallelverarbeitung auszuwählen,
- Verkehrsverarbeitungseinheiten (11 bis 13), die mit der Auswahleinheit gekoppelt und angepaßt sind, um Dateneinheiten parallel zu verarbeiten,
- eine Aggregationseinheit (15), die mit den Verkehrsverarbeitungseinheiten gekoppelt und angepaßt ist, um verarbeitete Dateneinheiten für die weitere Übertragung zu verarbeiten,
***dadurch gekennzeichnet, daß*** die Netzwerkeinheit außerdem umfaßt:
- eine Arbitrierungseinheit (16), die mit den Verkehrsverarbeitungseinheiten gekoppelt und für eine einzelne verarbeitete Dateneinheit (24) angepaßt ist, die in einer einzelnen Verkehrsverarbeitungseinheit (11) zur weiteren Aggregation und Übertragung bereit ist, um einen einzelnen Verkehrsfluß (FlowC) zu identifizieren, zu dem die einzelne verarbeitete Dateneinheit gehört,
um zu prüfen, ob eine weitere Dateneinheit (23; 25), die durch eine weitere Verkehrsverarbeitungseinheit (12; 13) bearbeitet wurde, zu dem einzelnen Verkehrfluß gehört und der einzelnen verarbeiteten Dateneinheit innerhalb des einzelnen Verkehrsflusses vorangeht,
wenn nicht zutreffend, um die Lieferung der einzelnen verarbeiteten Dateneinheit zur weiteren Aggregation und Übertragung zu erlauben (durchzuführen), andernfalls, um die Lieferung der einzelnen verarbeiteten Dateneinheit zur weiteren Aggregation und Übertragung nicht zu erlauben, solange wie die Verarbeitung und Lieferung der weiteren Dateneinheit nicht beendet ist.

2. Eine Netzwerkeinheit nach Anspruch 1, **dadurch *gekennzeichnet,* daß** der einzelne Verkehrsfluß mittels einer speziellen Quelladresse und/oder einer speziellen Zieladresse identifiziert wird.

3. Eine Netzwerkeinheit nach Anspruch 1, **dadurch *gekennzeichnet,* daß** der einzelne Verkehrsfluß mittels eines speziellen Nutzlasttyps identifiziert wird.

4. Eine Netzwerkeinheit nach Anspruch 1, ***dadurch gekennzeichnet,* daß** der einzelne Verkehrsfluß mittels einer speziellen Verkehrspriorität identifiziert wird.

5. Eine Netzwerkeinheit nach Anspruch 1, **dadurch *gekennzeichnet,* daß** die Arbitrierungseinheit außerdem angepaßt ist, um Übertragungs- oder Ablauffolgenummern der einzelnen verarbeiteten Dateneinheit und der weiteren Dateneinheit zu vergleichen, **dadurch** zu bestimmen, ob die weitere Dateneinheit der einzelnen verarbeiteten Dateneinheit innerhalb des einzelnen Verkehrsflusses vorangeht.

6. Eine Netzwerkeinheit nach Anspruch 1, **dadurch *gekennzeichnet, daß*** die Arbitrierungseinheit in die Aggregationseinheit zusammengefaßt ist.

7. Eine Netzwerkeinheit nach Anspruch 1, **dadurch *gekennzeichnet,* daß** die Arbitrierungseinheit über die Verarbeitungseinheiten verteilt ist.

8. Ein Verfahren zur Verarbeitung und Übertragung von Dateneinheiten (21 bis 26), die zu verschiedenen Verkehrsflüssen (FlowA; FlowB; FlowC) gehören, und umfassend die Schritte:
- Auswählen der Dateneinheiten für die weitere Parallelverarbeitung;
- paralleles Verarbeiten der Dateneinheiten in Verkehrsverarbeitungseinheiten (11 bis 13),
- Aggregieren der verarbeiteten Dateneinheiten zur weiteren Übertragung,
***dadurch gekennzeichnet,* daß** das Verfahren für eine einzelne verarbeitete Dateneinheit (24), die in einer einzelnen Verkehrsverarbeitungseinheit (11) zur weiteren Aggregation und Verarbeitung bereit ist, außerdem die Schritte umfaßt;
- Identifizieren eines einzelnen Verkehrsflusses (FlowC), zu dem die einzelne verarbeitete Dateneinheit gehört,
- Prüfen, ob eine weitere Dateneinheit (23; 25), die durch eine weitere Verkehrsverarbeitungseinheit (12; 13) verarbeitet wurde, zum einzelnen Verkehrsfluß gehört und der einzelnen verarbeiteten Dateneinheit innerhalb des einzelnen Verkehrsflusses vorangeht,
- wenn nicht zutreffend, Erlauben (Durchführen) der Lieferung der einzelnen verarbeiteten Dateneinheit zur weiteren Aggregation und Übertragung, andernfalls, um die Lieferung der einzelnen verarbeiteten Dateneinheit zur weiteren Aggregation und Übertragung nicht zu erlauben, solange wie die Verarbeitung und Lieferung der weiteren Dateneinheit nicht beendet ist.

## Revendications

1. Unité de réseau (1) adaptée pour traiter et transmettre des unités de données (21 à 26) appartenant à des flux de trafic distincts (FlowA ; FlowB ; FlowC) et comprenant :
- une unité de distribution (14) adaptée pour distribuer lesdites unités de données en vue d'un traitement parallèle additionnel,
- des unités de traitement de trafic (11 à 13) connectées à ladite unité de distribution et adaptée pour traiter en parallèle lesdites unités de données,
- une unité d'agrégation (15) connectée auxdites unités de traitement du trafic et adaptée pour combiner lesdites unités de données traitées en vue de leur transmission additionnelle,
***caractérisée en ce que*** ladite unité de réseau comprend en outre :
- une unité d'arbitrage (16) connectée auxdites unités de traitement du trafic et adaptée, pour une unité de données (24) traitée particulière qui se trouve déjà dans une unité de traitement de trafic (11) particulière en vue de sa combinaison et de sa transmission additionnelles, pour identifier un flux de trafic particulier (FlowC) auquel appartient ladite unité de données traitée particulière afin de vérifier si une autre unité de données (23, 25), traitée par une autre unité de traitement de trafic (12, 13), appartient audit flux de trafic particulier et précède ladite unité de données traitée particulière au sein dudit flux de trafic particulier,
à défaut, autoriser (valider) la délivrance de ladite unité de données traitée particulière en vue de sa combinaison et de sa transmission additionnelles,
sinon, ne pas autoriser la délivrance de ladite unité de données traitée particulière en vue de sa combinaison et de sa transmission additionnelles tant que le traitement et la délivrance de ladite autre unité de données ne sont pas terminés.

2. Unité de réseau selon la revendication 1, ***caractérisée en ce que*** ledit flux de trafic particulier est identifié au moyen d'une adresse source particulière et/ou d'une adresse destinataire particulière.

3. Unité de réseau selon la revendication 1, ***caractérisée en ce que*** ledit flux de trafic particulier est identifié au moyen d'un type de charge utile particulier.

4. Unité de réseau selon la revendication 1, ***caractérisée en ce que*** ledit flux de trafic particulier est identifié au moyen d'une priorité de trafic particulière.

5. Unité de réseau selon la revendication 1, ***caractérisée en ce que*** ladite unité d'arbitrage est en outre adaptée pour comparer les numéros séquentiels de transmission ou d'ordonnancement de ladite unité de données traitée particulière et de ladite autre unité de données, déterminant ainsi si ladite autre unité de données précède ladite unité de données traitée particulière au sein dudit flux de trafic particulier.

6. Unité de réseau selon la revendication 1, ***caractérisée en ce que*** ladite unité d'arbitrage est centralisée dans ladite unité d'agrégation.

7. Unité de réseau selon la revendication 1, ***caractérisée en ce que*** ladite unité d'arbitrage est distribuée sur lesdites unités de traitement.

8. Procédé de traitement et de transmission d'unités de données (21 à 26) appartenant à des flux de trafic distincts (FlowA; FlowB ; FlowC) et comprenant les étapes suivantes :
- distribution desdites unités de données en vue de leur traitement parallèle additionnel,
- traitement desdites unités de données en parallèle dans des unités de traitement du trafic (11 à 13),
- combinaison desdites unités de données traitées en vue de leur transmission additionnelle,
***caractérisé en ce que*** ledit procédé comprend en outre, pour une unité de données traitée particulière (24) qui est prête dans une unité de traitement de trafic particulière (11) en vue d'une combinaison et d'une transmission additionnelles, les étapes suivantes :
- identification d'un flux de trafic particulier (FlowC) auquel appartient ladite unité de données traitée,
- contrôle pour savoir si une autre unité de données (23, 25) traitée par une autre unité de traitement de trafic (12, 13) appartient audit flux de trafic particulier et précède ladite unité de données traitée au sein dudit flux de trafic particulier,
- à défaut, autoriser (valider) la délivrance de ladite unité de données traitée particulière en vue de sa combinaison et de sa transmission additionnelles, sinon, ne pas autoriser la délivrance de ladite unité de données traitée particulière en vue de sa combinaison et de sa transmission additionnelles tant que le traitement et la délivrance de ladite autre unité de données ne sont pas terminés.
